(19) Europäisches Patentamt
European Patent Office
Office européen des brevets

(11) **EP 1 359 436 B1**

(12) **FASCICULE DE BREVET EUROPEEN**

(45) Date de publication et mention
de la délivrance du brevet:
**12.01.2011 Bulletin 2011/02**

(51) Int Cl.:
**G01S 13/78** *(2006.01)*   **G01S 13/93** *(2006.01)*
**G01S 13/76** *(2006.01)*

(21) Numéro de dépôt: **03100883.2**

(22) Date de dépôt: **02.04.2003**

(54) **Procédé et système de localisation d'une cible répondant en Mode C dans un système interrofation réponse (IFF)**

Verfahren und System zur Ortung eines im IFF Mode C antwortenden Ziels

Method and system for locating a target responding in IFF mode C

(84) Etats contractants désignés:
**AT BE BG CH CY CZ DE DK EE ES FI FR GB GR HU IE IT LI LU MC NL PT RO SE SI SK TR**

(30) Priorité: **05.04.2002 FR 0204266**

(43) Date de publication de la demande:
**05.11.2003 Bulletin 2003/45**

(73) Titulaire: **Thales**
**75008 Paris (FR)**

(72) Inventeurs:
• **ROZE, Thierry**
**Thales Intellectual Property**
**94117 CX ARCUEIL (FR)**
• **Trin, Jean-Marc**
**Thales Intellectual Property**
**94117 CX ARCUEIL (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**FR-A- 2 730 567     US-A- 4 782 450**
**US-B1- 6 222 480     US-B1- 6 278 396**

• **DATABASE INSPEC [en ligne] INSTITUTE OF ELECTRICAL ENGINEERS, STEVENAGE, GB; JANEX A: "3D monopulse localization in airborne IFF interrogator" Database accession no. 3080010 XP009002916 & INTERNATIONAL CONFERENCE RADAR 87 (CONF. PUBL. NO. 281), LONDON, UK, 19-21 OCT. 1987, pages 185-188, 1987, London, UK, IEE, UK ISBN: 0-85296-352-1**
• **VAN SICKLE G A: "Allied air identification" TACTICAL COMMUNICATIONS CONFERENCE, 1996., PROCEEDINGS OF THE 1996 FORT WAYNE, IN, USA 30 APRIL-2 MAY 1996, NEW YORK, NY, USA,IEEE, US, 30 avril 1996 (1996-04-30), pages 365-370, XP010201871 ISBN: 0-7803-3658-5**

**EP 1 359 436 B1**

**Description**

La présente invention concerne un procédé et un système permettant notamment de localiser une cible à l'aide d'un porteur équipé d'une antenne de direction de pointage donnée, la cible et le porteur communiquant entre elles par un système d'interrogation-réponse de type IFF (abréviation anglo-saxonne de « Identification Friend or Foe »).

Elle s'applique, par exemple dans le domaine de l'aéronautique, pour un système IFF embarqué appelé aussi radar secondaire, ayant une fonction de gérer les interrogations-réponses IFF.

La localisation et l'identification d'un aéronef distant nécessitent deux radars. Le radar primaire permet de localiser la cible et le radar secondaire, ou IFF, de l'identifier. La corrélation de ces deux informations (localisation et identification) est immédiate lorsque l'antenne primaire et l'antenne secondaire sont couplées. Un tel fonctionnement est couramment utilisé pour les stations sol et lorsque les radars sont à balayage mécanique.

L'évolution technologique dans le domaine des antennes a permis, notamment, de développer des antennes à balayage électronique. L'antenne est alors fixe et la direction de pointage du faisceau est obtenue au moyen de déphaseurs électroniques ayant pour fonction de dévier les faisceaux. Le radar primaire et le radar secondaire sont alors indépendants l'un de l'autre et la corrélation des deux sources d'information devient plus délicate.

La transmission par le système IFF des informations de localisation et d'identification au calculateur principal du porteur, permet de les associer aux informations de localisation obtenues par le radar primaire.

Le document intitulé "3D monopulse localization in airborne IFF interrogator" XP009002916 Database accession n° 30800100 décrit un procédéutilisant 4 dipôles dénérant une interrogation dans un cône de pointage très étroit de quelques degrés.

Le brevet FR - A -2 730 567 concerne le fonctionnement d'un système IFF à balayage électronique.

Le brevet US 6 278 396 décrit un système auto-collision.

Le brevet US 4 782 450 concerne une méthode passive et un dispositif pour éviter les collisions d'aéronefs.

L'objet de l'invention concerne un procédé et un dispositif permettant de localiser une cible dans l'espace, au cours d'un processus d'interrogation de type IFF et en utilisant une antenne de direction de pointage donnée, telle qu'une antenne à balayage électronique.

L'invention concerne un procédé pour déterminer la position d'une ou de plusieurs cibles au moyen d'une antenne de type IFF, l'antenne ayant une direction de pointage donnée, ledit procédé comprenant au cours d'une interrogation IFF une étape au cours de laquelle le calculateur de mission du système IFF combine au moins trois paramètres représentatifs de la position de la ou des cibles, de celle du porteur et la direction de pointage du faisceau de l'antenne pour localiser la cible, caractérisé en ce que les trois paramètres utilisés sont par exemple la distance D de la cible au porteur, l'altitude A de la cible et celle $A_{pf}$ du porteur équipé de l'antenne IFF et la valeur d'écartométrie de la cible, ladite altitude A étant obtenue par réception d'une réponse suite à ladite interrogation IFF et en ce qu'il comporte au moins les étapes suivantes :

➢ déterminer le cercle $C_1$ résultant de l'intersection de la sphère iso-distance sur laquelle peut se trouver la cible et d'un plan sensiblement parallèle au plan vertical du porteur équipé de l'antenne IFF.
➢ déterminer le cercle $C_2$ issu de l'intersection du plan iso-altitude de la cible et de la sphère iso-distance,
➢ réaliser l'intersection des deux cercles $C_1$ et $C_2$ pour obtenir les coordonnées de la cible.

Le mode d'interrogation du porteur vers la cible est par exemple un mode IFF tel que le mode C.

L'invention a trait aussi à un système de localisation d'une ou de plusieurs cibles par un porteur équipé d'une antenne de direction de pointage donnée ou radar secondaire caractérisé en ce qu'il comporte au moins un radar primaire et un système IFF commandant le radar secondaire IFF, adapté à mettre en oeuvre au moins une des caractéristiques du procédé exposé ci-dessus.

L'objet de l'invention offre notamment les avantages suivants:

➢ Une localisation plus précise de la cible, les systèmes de l'art antérieur ne permettent qu'une localisation théorique et approximative de la cible basée sur la zone de pointage de l'antenne,
➢ La possibilité d'obtenir de manière précise le site et l'azimut réel de la cible.

D'autres avantages et caractéristiques de la présente invention apparaîtront mieux à la lecture de la description qui suit en relation aux dessins annexés qui représentent :

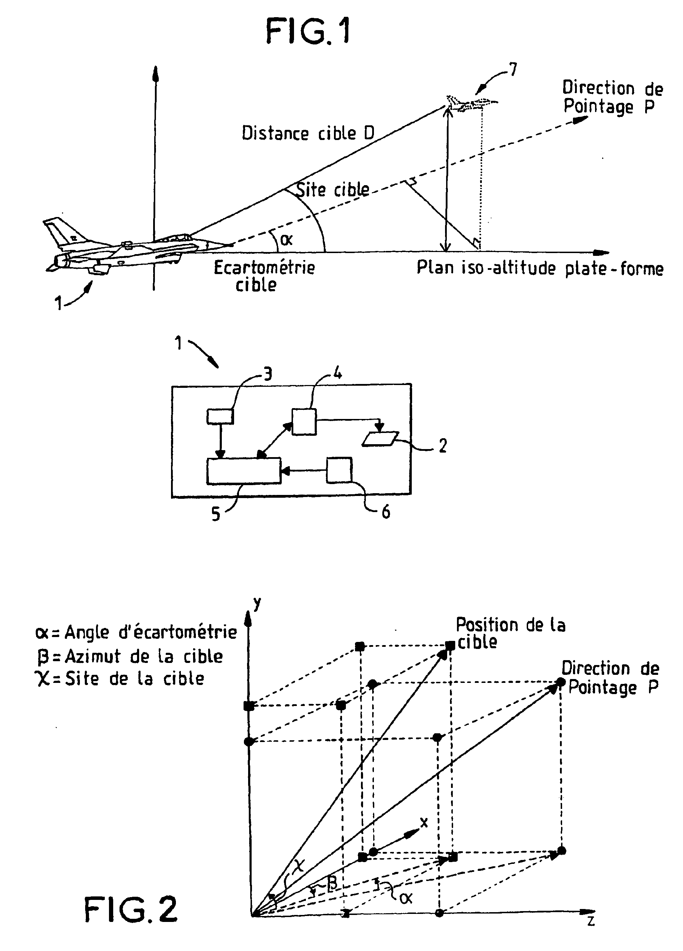

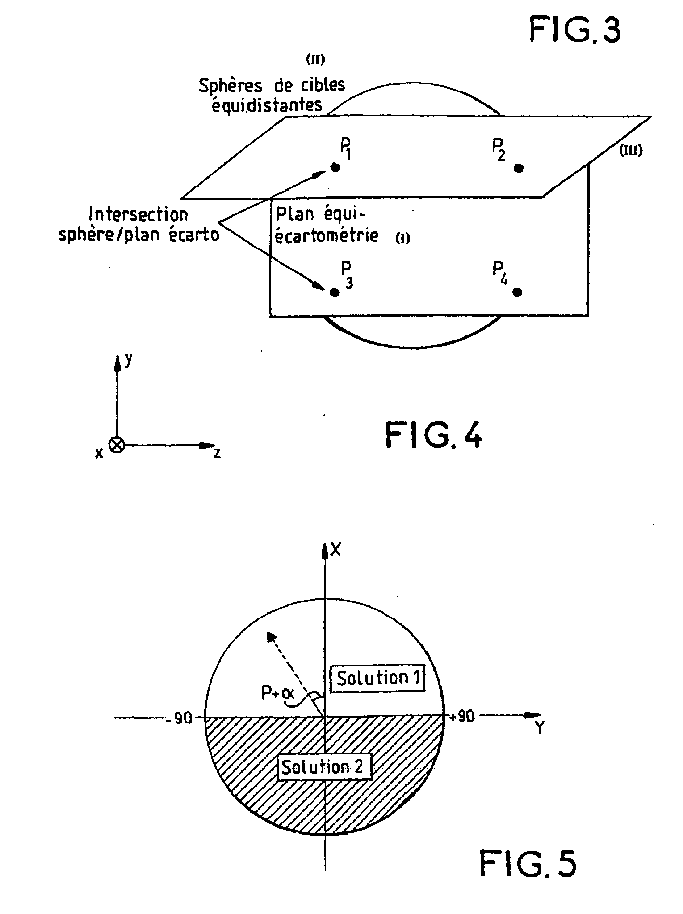

➢ La figure 1 un exemple de système de localisation,
➢ La figure 2 différents paramètres utilisés pour déterminer des informations de localisation de la cible,
➢ La figure 3 les positions possibles de la cible,
➢ La figure 4 le « repère avion »,

➢ La figure 5 une solution pour lever l'indétermination de la valeur de x.

Afin de mieux faire comprendre l'objet de la présente invention, la description qui suit donnée à titre illustratif et nullement limitatif a trait à un système comportant une cible à localiser et un porteur (avion ou plate-forme) équipé d'une antenne à balayage électronique.

Les antennes à balayage électronique étant connues de l'Homme du métier, et ne faisant pas l'objet de l'invention, leur architecture ne sera pas détaillée.

Le procédé s'applique aussi bien pour détecter une cible qui a été identifiée, que pour l'identification d'objets ou d'appareils se trouvant dans une zone donnée de l'espace.

Le système de localisation représenté à la figure 1 comporte par exemple les éléments suivants : un porteur 1 ou avion équipé d'une antenne électronique à balayage 2 de direction de pointage donnée constituant le radar secondaire ou IFF ayant notamment pour rôle d'identifier la cible, un radar primaire 3 ayant notamment pour fonction de permettre la localisation de la cible, un système IFF 4 qui commande le radar secondaire. Il comporte aussi un calculateur de mission 5 adapté par exemple à corréler les informations provenant du radar primaire et du radar secondaire afin d'identifier de manière précise la cible 7 à identifier et un altimètre 6. Le radar primaire 3, le système IFF 4 et l'altimètre 6 sont en liaison avec le calculateur de mission au moyen de liaisons classiques connues de l'Homme du métier. Le porteur comporte aussi tous les dispositifs habituellement utilisés dans le domaine de l'IFF.

Le calculateur de mission 5 récupère, par exemple, les informations du radar primaire et les informations issues du système IFF. Il corrèle ensuite les informations de localisation issues de ces deux radars pour émettre vers le pilote une information complète sur le plot ou la cible (l'information complète comporte par exemple, la position exacte de la cible, son identification, etc.).

Le système IFF du porteur, par exemple,

➢ pointe l'antenne vers la cible définie par le calculateur de mission,
➢ émet des interrogations spécifiées par exemple par le calculateur de mission telle qu'une interrogation IFF,
➢ reçoit et décode les réponses de la cible,
➢ détermine la distance (par calcul du temps de propagation par exemple), l'altitude (par exemple à l'aide de la réponse mode C de la cible) et l'azimut (en exécutant les étapes du procédé selon l'invention par exemple) de la cible,
➢ calcule la localisation de la cible,
➢ puis transmet ces informations au calculateur de mission.

La cible 7 à identifier possède, par exemple, un répondeur IFF non représenté décodant les interrogations reçues et émettant les réponses correspondantes « à la ronde ». Le répondeur est constitué d'un système IFF répondeur 8, d'antennes émettrices/réceptrices 9 et d'un alticodeur 10 ou altimètre connus de l'Homme du métier.

Le système IFF de la cible traduit par exemple l'altitude de la cible en code mode C et répond aux interrogations du porteur.

Pour des raisons de simplification de figure, les différents éléments: radars, antennes, système IFF, calculateurs ne sont pas représentés de façon détaillée.

Avant d'expliciter les étapes exécutées dans le procédé, différents paramètres et données utilisés sont schématisés à la figure 2.

➢ L'angle de la cible est déterminée par exemple à partir de son code de réponse en mode C tel qu'il est défini, par exemple, dans le volume IV - Annexe 10 de l'OACI (juillet 1998).
➢ L'angle d'écartométrie $\alpha$ est donné par exemple par la mesure de la projection, dans le plan de l'avion, de l'axe de la réponse cible par rapport à l'axe de l'antenne. Ce plan est par exemple défini en fonction de l'axe de l'avion; c'est à dire que le plan (Ox,Oz) est parallèle au plan des ailes de l'avion, le plan (Ox, Oy) est parallèle au plan de la dérive; l'axe Ox est dans la direction du cap vrai de l'appareil.
➢ La distance D entre le porteur et la cible est déterminée, par exemple, à l'aide du temps écoulé entre l'interrogation émise par le porteur et la réception de la réponse de la cible. Le système IFF du porteur comprenant différentes cartes numériques de traitement (connues de l'Homme du métier) et le radar IFF, effectue par exemple, ces traitements avant d'envoyer vers le calculateur de mission les informations de localisation.
➢ L'altitude du porteur est par exemple directement donnée par le calculateur de mission à partir des informations obtenues de l'altimètre.

Sur cette figure 2 sont aussi représentées l'azimut $\beta$ de la cible et le site $\chi$ de la cible.

Les étapes du procédé qui suivent sont données comme exemple non limitatif, dans le cas où une cible est détectée par le radar primaire de l'appareil. Le pilote lance, par exemple, une demande d'identification au système IFF, sur cette cible donnée. Le calculateur de mission transmet cette demande en définissant une zone de l'espace sur laquelle cette identification doit être effectuée.

Globalement, le procédé selon l'invention comporte par exemple au moins les deux phases suivantes :

1- pointer l'antenne dans la direction de la zone à interroger. Pour cela, le calculateur de mission, par exemple, désigne la cible ou la zone à interroger, et le système IFF du porteur vient positionner l'antenne, donc effectuer le pointage de l'antenne (diriger le faisceau d'interrogation vers la cible).

2- exploiter les informations reçues de la ou des cibles interrogées, afin de localiser ces cibles de manière précise.

Cette exploitation des données est tout d'abord réalisée au niveau du système IFF porteur, afin de générer les informations de localisation, puis au niveau du calculateur de mission pour corréler les informations de localisation IFF et les informations de localisation du radar primaire.

Les informations utilisées par le système IFF du porteur sont par exemple les suivantes :

➢ Information distance; la distance correspond à l'ensemble des points équidistants de la cible au porteur, cet ensemble constitue la sphère de localisation de la cible ;

➢ Information écartométrie; l'ensemble des points associés à une valeur d'écartométrie donnée, constitue par exemple un plan perpendiculaire au plan de l'avion ;

➢ Information d'altitude; l'ensemble des points pouvant se trouver à une altitude donnée constitue un plan parallèle au plan de l'avion précédemment défini.

Positions possibles de la cible

Les positions possibles de cible sont déterminées par exemple à partir de l'intersection des trois figures géométriques suivantes : la sphère de localisation, le plan perpendiculaire au plan de l'avion, le plan parallèle au plan de l'avion. Il y a au maximum deux positions possibles de la cible issues de ces intersections. La figure 3 schématise le plan d'équi-écartométrie (I), une sphère de cibles équidistantes (II), le plan d'équi-altitude (III), leurs intersections et les positions possibles de la cible $P_1$, $P_2$, $P_3$, $P_4$

Pour déterminer la position exacte de la cible, le système IFF du porteur utilise la direction de pointage P et l'altitude A de la cible pour en déduire la seule position possible pour la cible. Par exemple, la direction de pointage P permet de sélectionner la seule position possible entre les deux couples $\{P_1, P_3\}$ et $\{P_2, P_4\}$ et la valeur de l'altitude de la cible entre les points $P_1$ et $P_3$ ou $P_2$ et $P_4$.

Localisation

Pour réaliser la deuxième phase, localisation de la cible, le procédé exécute par exemple les étapes détaillées ci-après.

Au préalable, quelques notations utilisées sont rappelées.

➢ Altitude A de la cible : soit une cible située à l'altitude A, où A est exprimée en mètres. L'altitude est donnée par exemple par décodage du code SIF C selon la définition fournie par le volume IV Annexe 10 de l'OACI (Juillet 1998). L'équipement IFF utilise la réponse reçue en mode C pour déterminer l'altitude de la cible, par exemple, sur réception d'un code mode C, il décode par exemple cette réponse et la transforme en altitude.

➢ Azimut β de la cible : par rapport au porteur, cette cible se trouve à l'azimut β et à la distance D, avec β exprimé en degré et D exprimée en mètres, par exemple. Cette distance D est déterminée par exemple en mesurant le temps entre l'émission de la demande d'interrogation et la réception de la réponse de la cible, par le système IFF du porteur.

➢ Site de la cible : obtenu par exemple par $\chi = asin((A-A_{pf}/D))$.

➢ Altitude de la plateforme : notée Apf.

➢ Ecartométrie : l'écartométrie α de la cible par mesure de l'angle entre la direction de pointage et la direction de réception de la réponse.

➢ La direction de pointage P: exprimée en degré par rapport à la direction de la plate-forme.

Ces différents paramètres sont par exemple repérés dans un « repère avion », schématisé à la figure 3. Ce repère est dans cet exemple donné, avec la plate-forme vue de dos, x donnant la direction de la plate-forme. Les angles sont donnés par exemple dans le sens horaire.

Les étapes de calcul pour déterminer la position de la cible sont par exemple les suivantes :

La distance D de la cible au porteur fournit l'équation définissant la sphère iso-distance sur laquelle peut se trouver la cible :

$$x^2+y^2+z^2 = D^2 \quad (1)$$

A partir de la valeur de l'écartométrie $\alpha$, le système IFF du porteur détermine, par exemple, un plan parallèle au plan vertical de la plate-forme qui donnera dans le plan(x,y), par intersection avec la sphère (1) précédemment définie, un cercle $C_1$.

Soit $Z_e$ la projection de la position de la cible sur l'axe X :

$$Z_e = D \sin(\alpha+P) \text{ quelque soit la valeur du couple } (x, y) \quad (2)$$

P correspond à la direction de pointage.

le système d'équation obtenu à partir des relations (1) et (2) est :

$$x^2+y^2+z^2 = D^2$$

$$Z_e = D \sin(\alpha+P)$$

Le système IFF du porteur déduit des relations (1) et (2), l'équation du cercle $C_1$ représentatif de l'intersection prémentionnée

$$x^2+y^2= D^2 (1-\sin^2(\alpha+P)) \quad (3)$$

De façon similaire, le système IFF du porteur peut obtenir dans le plan (x,z), un plan correspondant au plan iso-altitude de la cible.

Soit $y_a$ la projection de la position de la cible sur l'axe y :

$$y_a = (A-A_{pf}) \text{ quelque soit le couple } (x, z) \quad (4)$$

D'où le système d'équation déduit des relations (1) et (4) par le système IFF

$$x^2+y^2+z^2 = D^2$$

$$y_a = A-A_{pf}$$

qui en déduit le cercle $C_2$ résultant de l'intersection avec la sphère initiale

$$x^2 + z^2 = D^2 - (A - A_{pf})^2 \qquad (5)$$

$$= D^2 - y_a^2$$

Pour obtenir les coordonnées possibles par exemple de la cible, le système IFF réalise l'intersection des deux cercles $C_1$ et $C_2$ définis par les relations (3) et (5).

$$\begin{cases} y^2 + x^2 = D^2(1 - \sin^2(\alpha + P)) \\ x^2 + z^2 = D^2 - y_a^2 \end{cases}$$

$$\Rightarrow \begin{cases} y^2 = D^2(1 - \sin^2(\alpha + P)) - x^2 \\ z^2 = D^2 - y_a^2 - x^2 \\ x^2 + y^2 + z^2 = D^2 - x^2 \end{cases}$$

$$\Rightarrow D^2 - D^2\sin^2(E + P) - x^2 + D^2 - y_a^2 - x^2 + x^2 = D^2$$

$$\Rightarrow x^2 = D^2(1 - \sin^2(\alpha + P)) - y_a^2 \qquad (6)$$

Les coordonnées de la cible dans le repère avion sont déterminées par les relations suivantes :

$$\begin{cases} z = D\sin(\alpha + P) & (2) \\ y = A - A_{pf} & (4) \\ x = \pm\sqrt{D^2(1 - \sin^2(\alpha + P)) - y_a^2} & (6) \end{cases}$$

Pour lever l'indétermination vis-à-vis de x, le système IFF exécute par exemple l'étape supplémentaire suivante :

$$\begin{cases} \text{Si} -90^\circ < (P + \alpha) < +90^\circ \Rightarrow x = \sqrt{D^2(1 - \sin^2(\alpha + P)) - y_a^2} \\ \text{Si} \begin{cases} (P + \alpha) > +90^\circ \\ (P + \alpha) < -90^\circ \end{cases} \Rightarrow x = -\sqrt{D^2(1 - \sin^2(\alpha + P)) - y_a^2} \end{cases}$$

Cette indétermination est représentée sur la figure 5 qui représente les deux solutions correspondantes.

## Revendications

1. Procédé de détermination de la position d'une ou de plusieurs cibles au moyen d'une antenne à balayage de type IFF, ladite antenne ayant une direction de pointage donnée, ledit procédé comprenant au cours d'une interrogation IFF une étape au cours de laquelle le calculateur de mission du système IFF combine au moins trois paramètres représentatifs de la position de la ou des cibles, de celle du porteur et la direction de pointage du faisceau de l'antenne pour localiser la cible, **caractérisé en ce que** les trois paramètres sont la distance D de la cible au porteur, l'altitude A de la cible et celle $A_{pf}$ du porteur équipé de l'antenne IFF et la valeur d'écartométrie de la cible, ladite altitude A étant obtenue par réception d'une réponse suite à ladite interrogation IFF et **en ce qu'**il comporte les étapes suivantes :

➢ déterminer le cercle $C_1$ résultant de l'intersection de la sphère iso-distance sur laquelle peut se trouver la cible et d'un plan sensiblement parallèle au plan vertical du porteur équipé de l'antenne IFF.
➢ déterminer le cercle $C_2$ issu de l'intersection du plan iso-altitude de la cible et de la sphère iso-distance,

➢ réaliser l'intersection des deux cercles $C_1$ et $C_2$ pour obtenir les coordonnées de la cible.

**2.** Procédé selon la revendication 1 **caractérisé en ce que** les coordonnées de la cible sont données par les relations suivantes

$$
\begin{cases}
z = D\sin(\alpha + P) & (2) \\
y = A - A_{pf} & (4) \\
x = \pm\sqrt{D^2(1 - \sin^2(\alpha + P)) - y_u^2} & (6)
\end{cases}
$$

**3.** Procédé selon la revendication 2 **caractérisé en ce qu'**il comporte une étape où l'on précise les coordonnées en x de la manière suivante

$$
\begin{cases}
\text{Si} -90° < (P + \alpha) < +90° \Rightarrow x = \sqrt{D^2(1 - \sin^2(\alpha + P)) - y_u^2} \\
\text{Si} \begin{cases} (P + \alpha) > +90° \\ (P + \alpha) < -90° \end{cases} \Rightarrow x = -\sqrt{D^2(1 - \sin^2(\alpha + P)) - y_u^2}
\end{cases}
$$

**4.** Procédé selon l'une des revendications 1 à 3 **caractérisé en ce que** le mode d'interrogation du porteur vers la cible est un mode IFF, mode C.

**5.** Système de localisation d'une ou de plusieurs cibles par un porteur équipé d'une antenne de direction de pointage donnée ou radar secondaire (2) **caractérisé en ce qu'**il comporte au moins un radar primaire (3) et un système IFF (4) en liaison avec le radar secondaire (2) et adapté à mettre en oeuvre au moins une des caractéristiques du procédé selon les revendications 1 à 4.

## Claims

**1.** A process for determining the position of one or more targets by means of an IFF type scanning antenna, said antenna having a predetermined aiming direction, said process including a step, during an IFF interrogation, in which the IFF system mission computer combines at least three parameters representing the position of the one or more targets, that of the carrier and the aiming direction of the antenna beam in order to locate the target, **characterised in that** the three parameters are the distance D from the target to the carrier, the altitude A of the target and the altitude $A_{pf}$ of the carrier fitted with the IFF antenna and the distance sensing value of the target, said altitude A being obtained by reception of a response following said IFF interrogation and **in that** it includes the following steps:

➢ determining the circle $C_1$ resulting from the intersection of the iso-distance sphere on which the target may be located and a plane essentially parallel to the vertical plane of the carrier fitted with the IFF antenna,
➢ determining the circle $C_2$ originating from the intersection of the iso-altitude plane of the target and the iso-distance sphere,
➢ realising the intersection of the two circles $C_1$ and $C_2$ in order to obtain the coordinates of the target.

**2.** The process according to claim 1, **characterised in that** the coordinates of the target are provided using the following relations:

$$
\begin{cases}
z = D\sin(\alpha + P) & (2) \\
y = A - A_{pf} & (4) \\
x = \pm\sqrt{D^2(1 - \sin^2(\alpha + P)) - y_u^2} & (6)
\end{cases}
$$

**3.** The process according to claim 2, **characterised in that** it includes a step in which the x-coordinates are specified as follows:

$$\begin{cases} Si -90° < (P+\alpha) < +90° \Rightarrow x = \sqrt{D^2(1-\sin^2(\alpha+P))-y_u{}^2} \\ Si \begin{cases} (P+\alpha) > +90° \\ (P+\alpha) < -90° \end{cases} \Rightarrow x = -\sqrt{D^2(1-\sin^2(\alpha+P))-y_u{}^2} \end{cases}$$

4. The process according to any one of claims 1 to 3, **characterised in that** the interrogation mode from the carrier to the target is an IFF mode, mode C.

5. A system for locating one or more targets by a carrier fitted with a predetermined aiming direction antenna or secondary radar (2), **characterised in that** it includes at least one primary radar (3) and an IFF system (4) associated with the secondary radar (2) and designed to implement at least one of the characteristics of the process according to claims 1 to 4.

**Patentansprüche**

1. Verfahren zum Ermitteln der Position von einem oder mehreren Zielen mittels einer Abtastantenne des IFF-Typs, wobei die Antenne eine vorbestimmte Zielrichtung hat, wobei das Verfahren bei einer IFF-Abfrage einen Schritt beinhaltet, bei dem der Missionscomputer des IFF-Systems wenigstens drei Parameter kombiniert, die die Position der ein oder mehreren Ziele, die des Trägers und die Zielrichtung des Antennenstrahls repräsentieren, um das Ziel zu orten, **dadurch gekennzeichnet, dass** die drei Parameter der Abstand D zwischen Ziel und Träger, die Höhe A des Ziels und die Höhe $A_{pf}$ des mit der IFF-Antenne ausgestatteten Trägers und der Distanzerfassungswert des Ziels sind, wobei die Höhe A durch Empfangen einer Antwort auf die IFF-Abfrage erhalten wird, und **dadurch**, dass es die folgenden Schritte beinhaltet:

➢ Ermitteln des Kreises $C_1$, der vom Schnittpunkt der Iso-Distanzsphäre, auf der sich das Ziel befinden kann, und einer Ebene im Wesentlichen parallel zur vertikalen Ebene des mit der IFF-Antenne ausgestatteten Trägers resultiert,
➢ Ermitteln des Kreises $C_2$, der vom Schnittpunkt der Iso-Höhenebene des Ziels und der Iso-Distanzsphäre ausgeht,
➢ Realisieren des Schnittpunkts der beiden Kreise $C_1$ und $C_2$, um die Koordinaten des Ziels zu erhalten.

2. Verfahren nach Anspruch 1, **dadurch gekennzeichnet, dass** die Koordinaten des Ziels durch die folgenden Beziehungen bereitgestellt werden:

$$\begin{cases} z = D\sin(\alpha+P) & (2) \\ y = A - A_{pf} & (4) \\ x = \pm\sqrt{D^2(1-\sin^2(\alpha+P))-y_u{}^2} & (6) \end{cases}$$

3. Verfahren nach Anspruch 2, **dadurch gekennzeichnet, dass** es einen Schritt beinhaltet, bei dem die x-Koordinaten wie folgt vorgegeben werden:

$$\begin{cases} Si -90° < (P+\alpha) < +90° \Rightarrow x = \sqrt{D^2(1-\sin^2(\alpha+P))-y_u{}^2} \\ Si \begin{cases} (P+\alpha) > +90° \\ (P+\alpha) < -90° \end{cases} \Rightarrow x = -\sqrt{D^2(1-\sin^2(\alpha+P))-y_u{}^2} \end{cases}$$

4. Verfahren nach einem der Ansprüche 1 bis 3, **dadurch gekennzeichnet, dass** der Abfragemodus vom Träger zum Ziel ein IFF-Modus ist, Modus C.

5. System zum Orten von einem oder mehreren Zielen durch einen Träger, der mit einer vorbestimmten Zielrichtungsantenne oder einem sekundären Radar (2) ausgestattet ist, **dadurch gekennzeichnet, dass** es wenigstens ein primäres Radar (3) und ein IFF-System (4) umfasst, das mit dem sekundären Radar (2) assoziiert und so ausgelegt ist, dass es wenigstens eine der Charakteristiken des Verfahrens gemäß den Ansprüchen 1 bis 4 implementiert.

# FIG.1

Direction de
Pointage P

Distance cible D

Site cible

α

Ecartométrie
cible

Plan iso-altitude plate-forme

1

7

3    4

2

5    6

---

FIG.2

α = Angle d'écartométrie
β = Azimut de la cible
χ = Site de la cible

Position de la
cible

Direction de
Pointage P

y

x

χ

β

α

z

FIG.3

(II)
Sphères de cibles
équidistantes

$P_1$    $P_2$    (III)
●        ●

Intersection
sphère/plan écarto    Plan équi-
écartométrie  (I)

$P_3$    $P_4$
●        ●

y
↑
⊗ ——→ z
x

FIG.4

↑X

Solution 1

P+α

−90 ——————————+90 ——→ Y

Solution 2

FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2730567 A
- US 6278396 B
- US 4782450 A